Europäisches Patentamt

European Patent Office

Office européen des brevets

(11) Veröffentlichungsnummer: **0 338 197**
**A1**

## (12) EUROPÄISCHE PATENTANMELDUNG

(21) Anmeldenummer: 89101846.7

(22) Anmeldetag: 03.02.89

(51) Int. Cl.4: **B65B 3/32** , **F16L 37/00**

(30) Priorität: 22.04.88 DE 3813573

(43) Veröffentlichungstag der Anmeldung:
25.10.89 Patentblatt 89/43

(84) Benannte Vertragsstaaten:
AT BE CH DE ES FR GB GR IT LI LU NL SE

(71) Anmelder: Effem GmbH
Eitzer Landstrasse
D-2810 Verden/Aller(DE)

(72) Erfinder: Gideon, Jürgen
Am Weissen Berge 2
D-2810 Verden/Aller(DE)
Erfinder: Krieger, Dieter
Kirchstrasse 37
D-2815 Langwedel-Etelsen(DE)
Erfinder: Mengel, Erich
Am Hubertushain 36
D-2810 Verden-Borstel(DE)

(74) Vertreter: Goddar, Heinz J., Dr. et al
FORRESTER & BOEHMERT
Widenmayerstrasse 4/I
D-8000 München 22(DE)

(54) **Portioniereinheit für eine Füllanlage zum Füllen von Konservendosen.**

(57) Portioniereinheit für eine Füllanlage zum Füllen von Konservendosen mit einem zähflüssigen, pastösen oder stückigen Füllgut, mit wenigstens einer auf einer Dichtplatte vorbeigeführten Zylindereinheit, wobei ein mit einer ersten Durchgangsbohrung (10) für das Füllgut ausgebildetes Unterteil (12), das mit einer konzentrisch zu der ersten Durchgangsbohrung (10) angeordneten Ringfeder (14) versehen ist, ein mit einer zweiten Durchgangsbohrung (16) für das Füllgut ausgebildetes, die Dichtplatte (22) tragenden Oberteil (18), das mit einer konzentrisch zur zweiten Durchgangsbohrung (16) angeordneten, die Ringfeder (14) aufnehmenden Ringnut (20) versehen ist, wobei die Tiefe der Ringnut (20) größer ist als die Höhe der Ringfeder (14) und die Ringnut (20) einen elastischen Ringschlauch (24) aufnimmt.

Fig. 2

## Portioniereinheit für eine Füllanlage zum Füllen von Konservendosen

Die Erfindung betrifft eine Portioniereinheit für eine Füllanlage zum Füllen von Konservendosen mit einem zähflüssigen, pastösen oder stückigen Füllgut, mit wenigstens einer auf einer Dichtplatte vorbeigeführten Zylindereinheit.

Bei derartigen Portioniereinheiten für Füllanlagen zum Füllen von Konservendosen mit einem zähflüssigen, pastösen oder stückigen Füllgut muß sichergestellt sein, daß die Dichtplatte mit einem solchen definierten Druck gegen die Unterfläche der Füllzylinder angedrückt wird, bei dem das offene Ende der Füllzylinder auf der Dichtplatte entlang gleiten kann, ein Austreten von Füllgut zwischen der Dichtplatte und dem offenen Ende des Füllzylinders jedoch zuverlässig vermieden wird.

Der Erfindung liegt die Aufgabe zugrunde, eine Positioniereinheit zu schaffen, bei der der Druck, mit dem die Dichtplatte gegen das offene Ende der Füllzylinder angedrückt wird, diese Voraussetzungen erfüllt.

Erfindungsgemäß wird diese Aufgabe bei einem ersten Ausführungsbeispiel gelöst durch ein mit einer ersten Durchgangsbohrung für das Füllgut ausgebildetes Unterteil, das mit einer konzentrisch zu der ersten Durchgangsbohrung angeordneten Ringfeder versehen ist, und ein mit einer zweiten Durchgangsbohrung für das Füllgut ausgebildetes, die Dichtplatte tragendes Oberteil, das mit einer konzentrisch zur zweiten Durchgangsbohrung angeordneten, die Ringfeder aufnehmenden Ringnut versehen ist, wobei die Tiefe der Ringnut größer ist als die Höhe der Ringfeder und die Ringnut einen elastischen Ringschlauch aufnimmt.

Ein zweites Ausführungsbeispiel ist gekennzeichnet durch ein mit einer ersten Durchgangsbohrung für das Füllgut ausgebildetes Unterteil, das mit einer konzentrisch zu der ersten Durchgangsbohrung angeordneten Ringnut versehen ist, und ein mit einer zweiten Durchgangsbohrung für das Füllgut ausgebildetes Oberteil, das mit einer konzentrisch zur zweiten Durchgangsbohrung angeordneten, in die Ringnut eingreifenden Ringfeder versehen ist, wobei die Tiefe der Ringnut größer ist als die Höhe der Ringfeder und die Ringnut einen elastischen Ringschlauch aufnimmt.

Weiter wird vorgeschlagen, daß der Ringschlauch luftgefüllt ist.

Weitere Merkmale und Vorteile der Erfindung ergeben sich aus den Ansprüchen und der Beschreibung, in der ein Ausführungsbeispiel der Erfindung anhand einer Zeichnung erläutert wird. Dabei zeigt:

Fig. 1 eine mit einer Portioniereinheit nach der Erfindung ausgebildete Füllanlage,

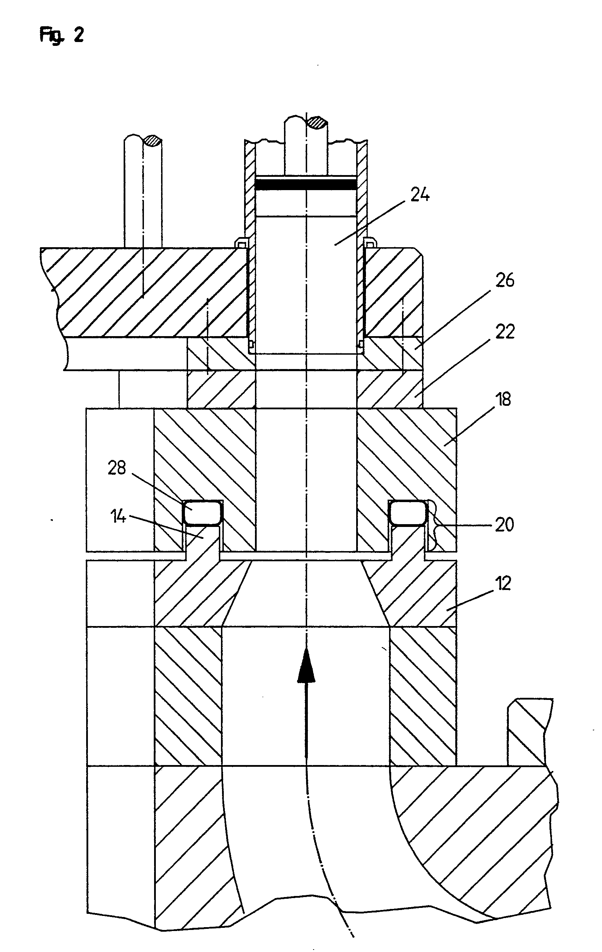

Fig. 2 vergrößerte Darstellung, die die Portioniereinheit verdeutlicht in einer Darstellung, bei der das die Dichtplatte tragende Oberteil gegen die Zylindereinheit angedrückt wird,

Fig. 3 eine Fig. 2 entsprechende Darstellung mit abgesenktem Oberteil, und

Fig. 4 eine den Fig. 2 und 3 entsprechende Darstellung bei defektem Schlauch.

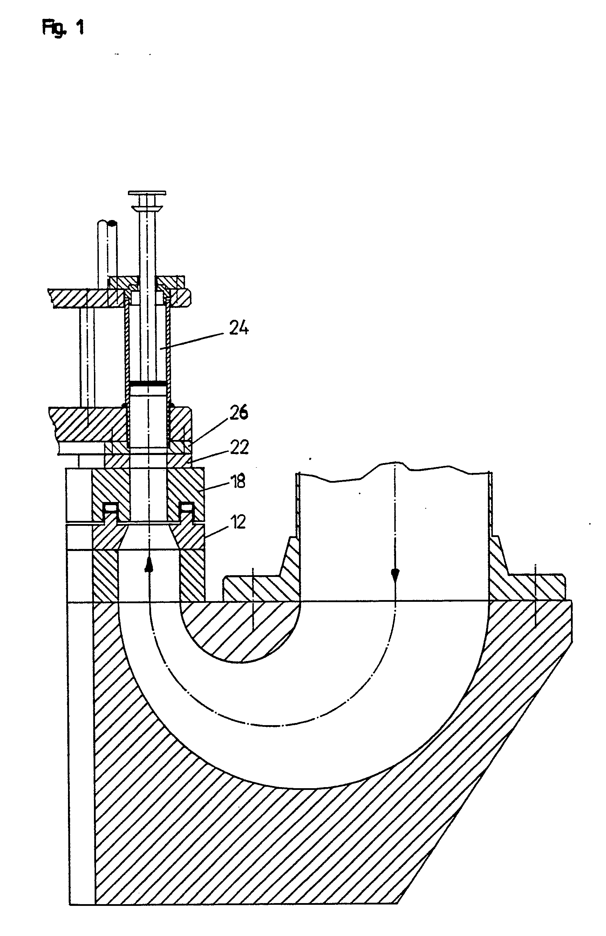

Fig. 1 zeigt eine Anlage zum Füllen von Konservendosen mit einem zähflüssigen, pastösen oder stückigen Füllgut, die aus einer mit einem Unterteil 12, einem Oberteil 18 und einer Vielzahl von Füllzylindern 24 besteht, die an der Dichtplatte 22 vorbeigeführt werden.

Die Füllzylinder 24 sind mit Dichtflanschen 26 versehen, die auf der Dichtplatte 22 gleiten, wobei jeder Füllzylinder 24 bei jedem Füllvorgang eine Menge des Füllguts aufnimmt, wie sie später in eine Konservendose eingebracht werden soll.

Um eine zuverlässige Übergabe zwischen dem Oberteil 18 der Positioniereinheit und dem Füllzylinder 24 zu ermöglichen, muß die Dichtplatte 22 mit einem geeigneten Druck gegen die Dichtflansche 26 der Füllzylinder 24 angedrückt werden. Dieser Druck muß so groß sein, daß ein Austreten von Füllgut zwischen Dichtplatte 22 und Dichtflansch 26 nicht erfolgt. Andererseits darf dieser Druck auch nicht zu groß sein, da die Gleitbewegung zwischen den Dichtflanschen 26 und der Dichtplatte 22 gewährleistet sein muß.

Um ein Andrücken der Dichtplatte 22 gegen die Dichtflansche 26 mit einem solchen konstanten Druck zu ermöglichen, ist eine Ringnut/Ringfeder-Ausbildung zwischen dem Unterteil 12 und dem Oberteil 18 der Positioniereinheit vorgesehen. Dabei ist die Tiefe der Ringnut 20 größer als die Tiefe der Ringfeder 14, so daß auch bei an dem Unterteil 12 anliegenden Oberteil 18 ein Raum zwischen der Oberfläche der Ringfeder 14 und dem Boden der Ringnut 20 verbleibt. In diesen verbleibenden Raum ist ein Ringschlauch 28 eingelegt, der mit Luft gefüllt ist.

Der Ringschlauch 28 drückt also das Oberteil 18 mit der auf diesem aufliegenden Dichtplatte 22 von dem Unterteil 12 weg in Richtung auf die Dichtflansche 26, wobei der Anpreßdruck zwischen der Dichtplatte 22 und den Dichtflanschen 26 sich aus dem Druck, mit dem der Ringschlauch 24 beaufschlagt ist, ergibt.

Dabei kann die Ringnut 20 wahlweise - wie dargestellt - in dem Oberteil 18 angeordnet sein, wobei die Ringfeder 14 ein Bestandteil des Unterteils 12 ist. Die Ringnut 20 kann jedoch auch in dem Unterteil 12 ausgebildet sein, während die Ringfeder 14 an dem Oberteil 18 ausgebildet ist.

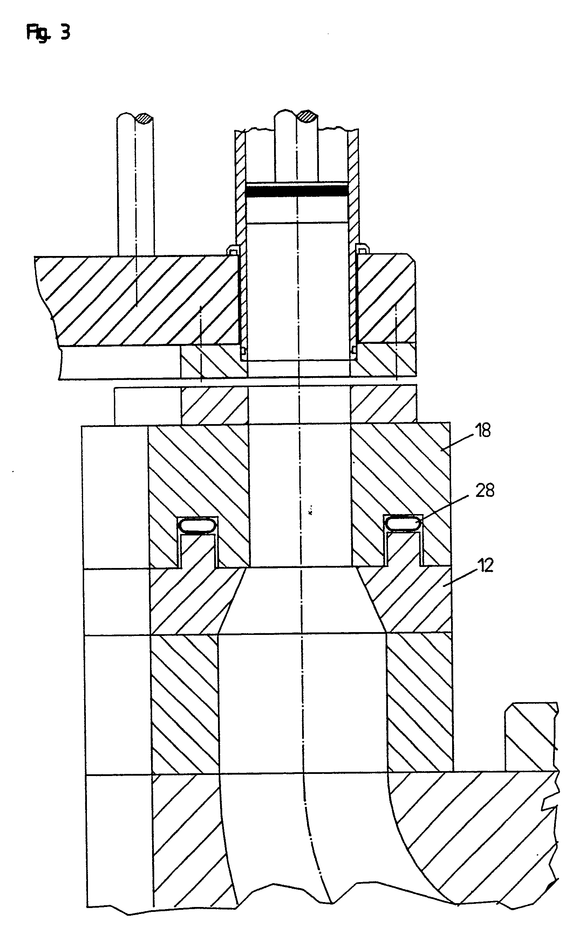

Fig. 3 verdeutlicht, daß bei Verringern des Drucks in dem Ringschlauch 28 der obere Teil 18 beispielsweise für Wartungs- oder Reinigungsarbeiten auf das Unterteil 12 abgesenkt werden kann, .

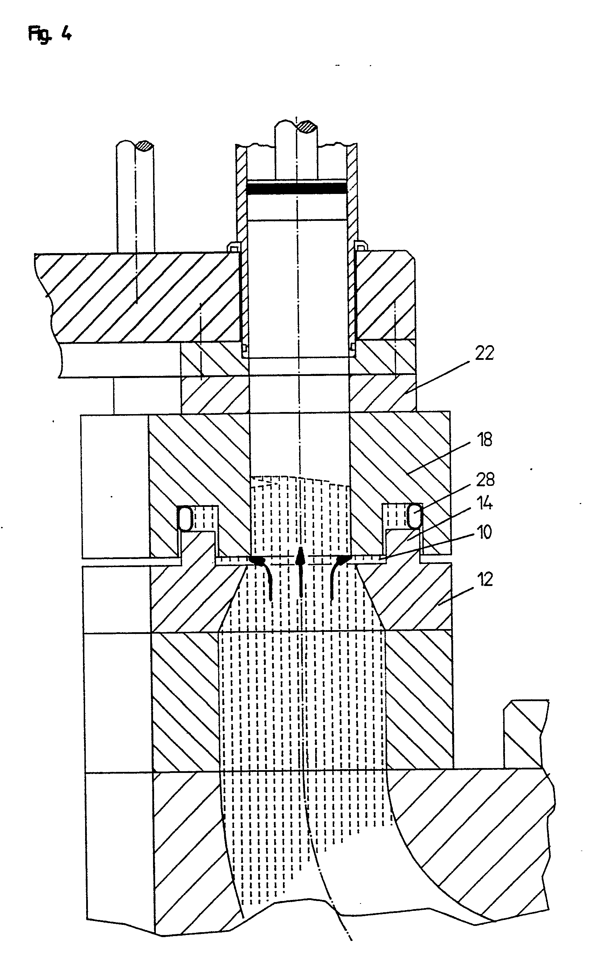

Fig. 4 schließlich verdeutlicht, daß auch dann, wenn der Ringschlauch 28 Luft verlieren sollte, bei Beaufschlagung der Durchgangsbohrungen 10 mit dem Füllgut die Funktion des Schlauches notdürftig noch erfüllt bleibt: Das Füllgut wird den Ringschlauch 28 nach außen drücken, und damit den Raum abdichten. Der Füllgutdruck ersetzt in diesem Fall die Funktion des vorgespannten Ringschlauchs. Auch bei einem plötzlichem Druckabfall in dem Ringschlauch 28 ist somit zumindest notdürftig die Funktion gewährleistet.

Die vorgeschlagene Ausbildung einer Portioniereinheit ermöglicht es somit, Füllgut in einer Füllanlage, bei der Füllzylinder an einer Dichtplatte vorbeigeführt werden, diese Dichtplatte mit einem vorgegebenen Druck an diese anzupressen, wobei die Funktion jedenfalls notdürftig auch bei Ausfall des Andruckmittels gewährleistet ist.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Ansprüche

1. Portioniereinheit für eine Füllanlage zum Füllen von Konservendosen mit einem zähflüssigen, pastösen oder stückigen Füllgut, mit wenigstens einer auf einer Dichtplatte vorbeigeführten Zylindereinheit, gekennzeichnet durch
- ein mit einer ersten Durchgangsbohrung (10) für das Füllgut ausgebildetes Unterteil (12), das mit einer konzentrisch zu der ersten Durchgangsbohrung (10) angeordneten Ringfeder (14) versehen ist, und
- ein mit einer zweiten Durchgangsbohrung für das Füllgut ausgebildetes, die Dichtplatte (22) tragenden Oberteil (18), das mit einer konzentrisch zur zweiten Durchgangsbohrung (16) angeordneten, die Ringfeder (14) aufnehmenden Ringnut (20) versehen ist, wobei
- die Tiefe der Ringnut (20) größer ist als die Höhe der Ringfeder (14) und die Ringnut (20) einen elastischen Ringschlauch (28) aufnimmt.

2. Portioniereinheit für eine Füllanlage zum Füllen von Konservendosen mit einem zähflüssigen, pastösen oder stückigen Füllgut, mit wenigstens einer auf einer Dichtplatte vorbeigeführten Zylindereinheit, gekennzeichnet durch
- ein mit einer ersten Durchgangsbohrung (10) für das Füllgut ausgebildetes Unterteil (12), das mit einer kon zentrisch zu der ersten Durchgangsbohrung (10) angeordneten Ringnut (20) versehen ist, und
- ein mit einer zweiten Durchgangsbohrung für das Füllgut ausgebildetes Oberteil (18), das mit einer konzentrisch zur zweiten Durchgangsbohrung (16) angeordneten, in die Ringnut (20) eingreifenden Ringfeder (14) versehen ist, wobei
- die Tiefe der Ringnut (20) größer ist als die Höhe der Ringfeder (14) und die Ringnut (20) einen elastischen Ringschlauch (28) aufnimmt.

3. Portioniereinheit nach Anspruch 1 oder Anspruch 2, dadurch gekennzeichnet, daß der Ringschlauch (28) luftgefüllt ist.

Fig. 1

24

26

22

18

12

EP 0 338 197 A1

Fig. 2

Fig. 3

EP 0 338 197 A1

Fig. 4

22

18

28

14

10

12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 240 807 (CAMPBELL SOUP CO.) * Seite 3, Zeile 37 - Seite 4, Zeile 55; Figuren 1-5,13 * | 1,2 | B 65 B 3/32<br>F 16 L 37/00 |
| A | EP-A-0 018 464 (C.E.R.C.I.) * Seite 2, Zeilen 1-37; Figuren * | 1-3 | |
| A | EP-A-0 179 975 (SIMONAZZI A. & L. S.p.A.) * Seite 3, Zeile 17 - Seite 4, Zeile 1; Figuren 5,6 * | 1-3 | |
| A | GB-A- 733 797 (DUNLOP RUBBER CO. LTD) * Seite 2, Zeilen 15-76; Figur * | 1,2 | |

**RECHERCHIERTE SACHGEBIETE (Int. Cl.4)**

B 65 B
F 16 L
G 01 F
B 67 C
B 67 D

Der vorliegende Recherchenbericht wurde für alle Patentansprüche erstellt

| Recherchenort | Abschlußdatum der Recherche | Prüfer |
|---|---|---|
| DEN HAAG | 10-07-1989 | JAGUSIAK A.H.G. |

EPO FORM 1503 03.82 (P0403)